# EUROPEAN PATENT SPECIFICATION

(11) **EP 2 371 637 B1**
(45) Date of publication and mention of the grant of the patent: **18.05.2016**
(21) Application number: 11152003.7
(22) Date of filing: 25.01.2011
(51) Int. Cl.: B60S 9/06

(54) **Electric drive unit for a corner steady**
Elektrische Antriebseinheit für eine Ausdrehstütze
Unité de commande électrique pour vérin

(30) Priority: 31.03.2010 DK 201000274
(43) Date of publication of application: 05.10.2011
(73) Proprietor: Carman Enterprise Co., Ltd., Yuhang District Hangzhou, Zhejiang 311121 (CN)
(72) Inventor: Li, Xian Wei, Hangzhou (CN); Chen, An Dong, Hangzhou (CN); Wang, Jun Qiang, HangZhou (CN)
(74) Representative: Olsen, Peter Vestergaard

(56) References cited:
- DE-U1- 20 003 180
- FR-A3- 2 644 151
- GB-A- 2 265 882
- US-A- 4 103 869

## Description

### Field of the Invention

The present invention relates to a drive unit for an electrically operated corner steady for a trailer vehicle, for example a caravan. The invention also concerns a method for retrofitting an electric drive unit according to the invention to a steady originally configured for manual operation only. The invention also relates to a corner steady fitted with a drive unit according to invention.

By a steady is meant an extendable support leg used for stabilising a trailer vehicle and for levelling the trailer on uneven ground, such that one steady is provided at each corner of the trailer at the downwardly facing bottom of the trailer.

### Background of the Invention

Steadies have been known for many years, usually designed as a pivotable leg that can be moved by turning a screw spindle. A nut on the spindle is connected with the leg by an arm, so that turning the spindle one way moves the leg downwards and turning it the opposite way moves the legs upwards. For manual operation, a hexagon head or another kind of attachment device for connection with a hand tool, e.g. a wrench, is usually fitted at an end of the screw spindle projecting through a hole in a fixed part of the steady.

Electrically powered steadies are known, e.g. from US 4103869 and EP 1 257 450, providing easy and even remotely controlled operation of all steadies on a trailer.

US 4103869 discloses a steady including a drive unit with an screw spindle connected with an output shaft projecting from a gearbox at one side thereof, where the gearbox is drivingly connected with an electric motor. By this design, the gearbox is attached at a side of a fixed part of the steady facing away from the screw spindle, and gearbox and motor consequently project out from one side of the fixed part, taking up space. A key head or hexagon section projects out of a fixed part of the steady for possible manual operation of the steady in case of electric failure. The electrically powered steady thus provided is an integrated unit, and retrofitting a manually operated steady with one described in US 4103869 takes places by removing the manual steady and replacing it with an entire new electric unit including leg and frame, means that the cost of the structural parts of the steady are to be including in the retrofitting.

EP 1 257 450 shows a electrically powered steady where motor and gearbox are integrated in a cylindrical housing which is coaxial with the screw spindle. By this design, no space is taken up outside the frame parts of the steady. The gearbox is constituted by a complicated epicyclical gear. The steady according to EP 1 257 450 is also an integrated unit which is only to be applied as a whole with structural parts, also making retrofitting expensive.

A further design comprising an electric drive unit for a corner steady is marketed by Kronings A/S, of Tjæreborg, Denmark. A box with an electric motor is mounted at the downwardly facing bottom of the trailer, and the output shaft of the motor box is connected by a cardan shaft including two universal joints to the spindle of the existing manually operated steady. Thus the electric power unit is only required for retrofitting and for providing an electric drive for an otherwise manually operated steady. However, it is not easy to mount and it is necessary to drill holes for the mounting on chassis of the caravan which could reduce the strength of the chassis. Another way is to mount the motor box at the front end of spindle. This provides easy mounting, but of-ten there is no space for the motor box because many new caravans have a plastic cover around the front end of the spindle of the steady.

GB2265882 discloses a drive unit according to the preamble of claim 1.

### Object of the Invention

An object of the invention is to solve the problems of the prior art and to provide a drive unit for a steady for a trailer, in particular a caravan, which can be retrofitted with simple means, in a more simple way and at a lower cost. Another object is to provide a method that facilitates retrofitting a drive unit on a manually operated steady without interfering with the structure of the trailer. A further object is to provide a drive unit for an electrically operated steady which takes up less or no space outside structural frame parts of the steady. A still further object of the invention is to provide a drive unit for a steady which provides alternative ways of retrofitting motor and gearbox to an existing manually operated corner steady.

### Description of the Invention

The invention provides a drive unit for an electrically operated steady for a trailer vehicle as indicated in the introduction which includes a screw spindle connected with gearbox which is drivingly connected with an electric motor. The drive unit according to the invention is peculiar in that the gearbox and motor are integrated with or attached to a bracket which is adapted to fit under and into a fixed part of a manually operated steady, and that the electric motor is disposed projecting to the same side of the bracket as the screw spindle and beside the screw.

The method for retrofitting a drive unit according to the invention includes the following steps:
a) dismounting the manually operated steady from the bottom of the trailer vehicle;
b) removing a manually operated spindle from the steady by separating a key head attached to the second end of the from spindle at a fixed part of the steady at one end of the spindle, drawing the second end of the manually operated spindle out of a hole in the fixed part, and unscrewing the manually operated spindle from a threaded nut receiving the spindle at the other end thereof;
c) mounting a free end of the screw spindle of the electric drive unit in the threaded nut of the steady by turning the screw spindle a number of revolutions;
d) letting an end of an output shaft or a shaft end of the screw spindle, respectively, through the hole in the fixed part of the steady such that the bracket is lodged under and in the fixed part of the steady;
e) remounting the steady with the electric drive unit on the bottom of the trailer vehicle.

By the extendable steady according to the invention fitted with a drive unit according to invention, the drive unit includes a screw spindle connected to a gearbox at one side thereof, the gearbox being drivingly connected with an electric motor, the gearbox and motor being integrated with or attached to a bracket which is adapted to fit under and into a fixed part of the steady, and where the electric motor is disposed projecting to the same side of the bracket as the screw spindle and either under or at one side of the screw spindle.

Here and in the description and claims, a "key head" denotes any kind of attachment point for a manual tool, like a wrench, the key head usually being a hexagon or square head, but possibly also a crosshead, a slotted head or a fluted head. Also, by the term "fixed part" is meant the part of the steady that is not movable in the mounted condition and to which the movable leg is pivotably attached.

Since the motor and the gearbox are provided under or at one side of the rotary axis of the screw spindle, the inventive drive unit will not take up space to the sides of the structural parts of the steady. Therefore, the inventive drive unit is not limited by lack of free space around the mounted steady for mounting the drive unit. No external transmission shaft is required either. The only part necessary to replace by the inventive drive unit is the screw spindle directly connected with the gearbox. By the method according to the invention, the existing threaded nut for receiving the screw spindle and the existing hole in the fixed frame part of the steady are utilised by retrofitting the drive unit. The bracket holding the gearbox and motor fits into the fixed part of the steady, and may utilise existing attachment means of the steady, and therefore fewer additional parts and operations are needed for retrofitting the drive unit as compared with the prior art.

In a first embodiment of the invention designed for retrofitting a steady with bifurcated legs that allow free space under the spindle, it is preferred that the electric motor is disposed under the screw spindle in the mounted condition, and that a first end of the output shaft projects from the gearbox at a first side thereof and a second end of the output shaft projects from an opposite second side of the gearbox, where the first end of the output shaft is connected with the screw spindle.

In a second embodiment of the invention designed for retrofitting a steady with a straight leg that does not allow free space under the spindle, it is preferred that the electric motor is disposed at one side of a vertical plane through the rotary axis of the screw spindle in the mounted condition of the drive unit, and where a first end of the output shaft projects from the gearbox at a first side thereof and a second end of the output shaft projects from an opposite second side of the gearbox, where the first end of the output shaft is connected with the screw spindle. In this case, however, the bracket may alternatively be designed as a casing for the gearbox, where the electric motor is attached to the casing at one side of a vertical plane through the rotary axis of the screw spindle in the mounted condition.

It is preferred that a second end of the output shaft or a shaft end of the screw spindle, respectively, is adapted to be secured to a key head for manual operation. Thus the possibility of manual operation of the steady is retained in case of failure of electric or control systems, or due to lack of electric power. By a preferred embodiment of the inventive method, there is provided a step of fitting and securing a key head on the second end of the output shaft or a shaft end of the screw spindle, respectively, between steps d) and e).

Furthermore, it is preferred the gearbox and the motor are at least partially enclosed by a common casing, the casing being attached to or integrated with the bracket. The casing may act as protective guard for impacts and dirt and/or as a practical means when assembling the gearbox and motor with the bracket.

In order to absorb axial load and reduce friction in the moving parts of the steady, in an embodiment it is preferred to provide an axial bearing for mounting between a key head on the second end of the output shaft or a shaft end of the screw spindle, respectively, and a fixed part of the steady. This may be done by putting the bearing on the second end of the output shaft or a shaft end of the screw spindle, respectively, before fitting and securing the key head.

Also, by the invention it is preferred that the remounting of the steady on the trailer in step e) is performed by using the already existing attachment points, e.g. screw holes, used for the original mounting of the steady before the retrofitting operation. No new holes are needed to be drilled in the bottom of the trailer, simplifying the remounting operation and utilising fastening means that are already provided in the original steady. Also, possible unwanted interfering with the trailer structure by drilling new holes is obviated.

By the preferred embodiment of the steady provided with the electric drive unit according to the invention, an axial bearing is provided for mounting between a key head on the second end of the output shaft or a shaft end of the screw spindle, respectively, on the one hand and a fixed part of the steady on the other hand. The bearing absorbs axial load transmitted from the spindle during operation and reduces the friction between the parts.

### Description of the Drawing

Embodiments of the invention will be described in the following with reference to the drawings, in which:
- Fig. 1: shows a perspective view a set including the main parts of a first embodiment of a drive unit according to the invention;
- Fig. 2: shows a perspective view from above of a partially extended steady with a retrofitted drive unit according to the first embodiment of the invention;
- Fig. 3: shows a longitudinal and vertical sectional view of the steady shown in Fig. 2;
- Fig. 4: shows an enlarged detail of Fig. 3;
- Fig. 5: shows a sectional view along the line A-A on Fig. 4;
- Figs. 6a-6d: show four initial steps of the method according to the invention, respectively, comprising disassembling an existing manually operated steady;
- Figs. 7a-7f: show six subsequent steps of the method according to the invention, respectively, comprising retrofitting the drive unit on the steady;
- Fig. 8: shows an exploded view of a set including the main parts of a second embodiment of a drive unit according to the invention;
- Fig. 9: shows the drive unit of Fig. 8 mounted on a steady in a detail perspective view from the spindle side;
- Fig. 10: shows a steady fitted with the drive unit of Fig. 8 from below in the collapsed condition of the steady;
- Fig. 11: shows a detail of mounted drive unit and steady of Fig. 9 in longitudinal section;
- Fig. 12: shows a sectional view on the line B-B in Fig. 11;
- Fig. 13: shows a perspective view from above of a steady fitted with a third embodiment of a drive unit according to the invention;
- Fig. 14: shows the same as on Fig. 13, but fitted with a cover rail;
- Fig. 15: is a section a sectional view along a vertical plane along the rotary axis of the steady on Fig. 13 in mounted condition; and
- Fig. 16: shows an exploded view of a set including the main parts of the third embodiment of a drive unit according to the invention.

### Detailed Description of Example Embodiments

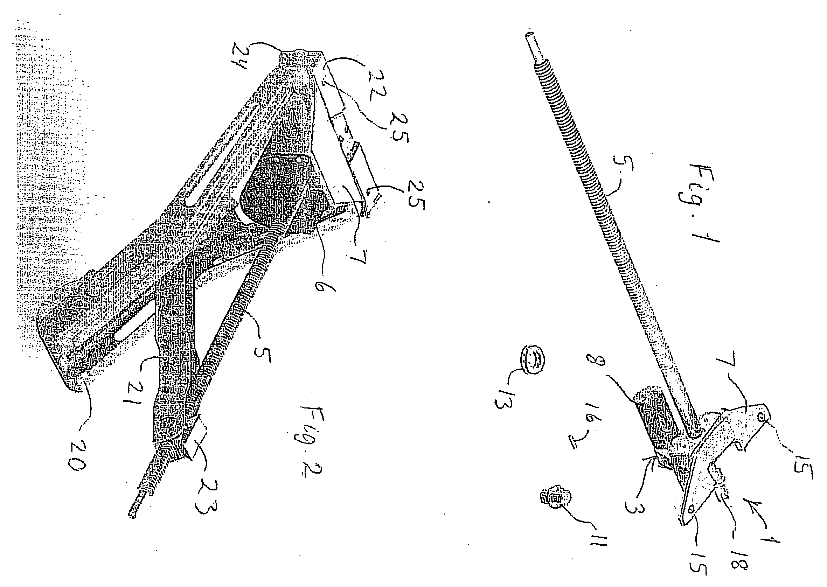

A first embodiment of a drive unit 1 according to the invention may be provided as a set shown on Fig. 1, featuring a screw spindle 5 and a gearbox/motor unit 3 that are joined to a bracket 7. The gearbox contains a reduction gear. The set includes a hexagon head 11 or similar key head, an axial bearing 13 and a pin 16 for mounting the drive unit. The set may optionally include a cover or casing 6 as shown on Fig. 2 for protecting the unit 3; the casing 6 is advantageous but not necessary for achieving the advantages of the invention.

As depicted on Fig. 1, the motor/gearbox unit 3 with spindle 5 and bracket 7 thus constitute the main part of the drive unit 1. In order to supply power and to control the operation of the motor 8 in the unit 3, a number of not shown wires connecting the motor 8 with e.g. DC power supply and an electronic control are to be provided; these elements may be provided and configured by the skilled in the art.

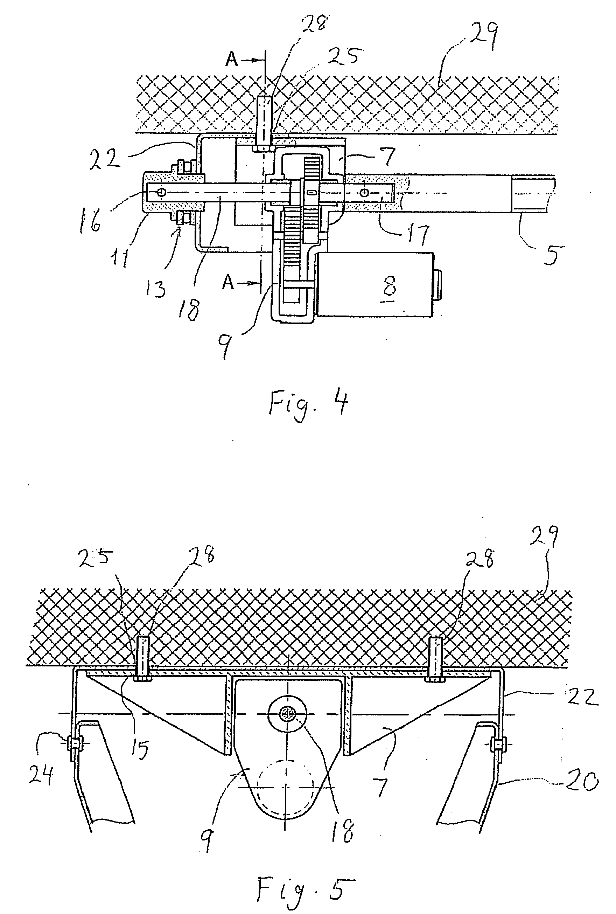

Turning to Figs. 2-5, these show the inventive drive unit mounted by fitting on a extendable steady of a well-known prior art design, including structural parts 20, 21, 22. A first end 17 of the output shaft is permanently connected with the screw spindle 5, see Fig. 4. It appears that the motor 8 is disposed under the first end 17 of the output shaft and under the spindle 5. The motor 8 thus extends approximately along and in parallel with the spindle 5, which is a preferred configuration of the inventive drive unit. The spindle 5 is received in a threaded nut with a sliding head 23 which is connected with a lever arm 21 capable of pivoting the leg 20 of the steady up and down around rotatable journals 24, e.g. in the form of rivets. The nut 23 is provided with a slide on top of it for transmitting the reactive forces from the leg 20 to a mounting base 29. The number 18 designates a second end of an output shaft from the gearbox 9. In the mounted position, the drive unit 1 is lodged with its bracket 7 into and under a fixed part 22 of the steady.

In order to absorb axial forces produced by the action of the spindle 5, an axial ball bearing 13 is preferred located between the hexagon head 11 and the exterior face of the fixed part 22 of the steady. This configuration reduces friction and wear, thereby requiring less power to be yielded by the motor 8. The pin 16 secures the hexagon head 11 to the second end 18 of the output shaft. In this embodiment, the steady with retrofitted drive unit 1 may also be operated manually by turning the hexagon head 11, for example in case of lack of power for the motor 8 or failure of the control system.

As seen on Fig. 5, the gearbox 9 to which the motor 8 is attached is lodged and secured in a slot or cavity designed for the purpose in the bracket 7. In this way, the same gearbox/motor unit 3 can be used for different brackets 7 that may be adapted for fitting into the interior of various fixed parts 22 of steadies of different brands.

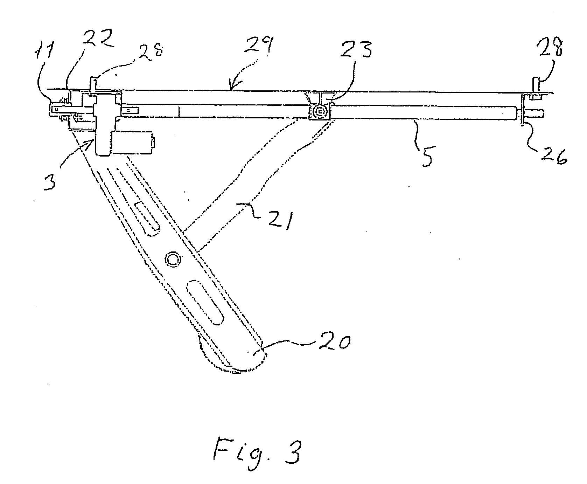

The steady retrofitted with the inventive drive unit is mounted on the downwardly facing bottom 29 of a caravan or a mounting base 29 fitting on the caravan. The screws 28 provided with the original steady for manual operation are used for fixing the steady and the drive unit to the bottom 29, see Figs. 3-5, using existing holes 25 on the steady and holes 15 provided for the purpose in the bracket 7 of the drive unit. A very simple and easy mounting is hereby achieved for the retrofitting operation.

It appears from the Figures that the retrofitted drive unit according to the invention will not take up space to the sides of the steady, and it will only take up little space downwardly where there is ample space. The drive unit according to the invention is thus independent of the existence of free space around the steady at the bottom of the caravan.

An embodiment of the method according to the invention will now be described in the following.

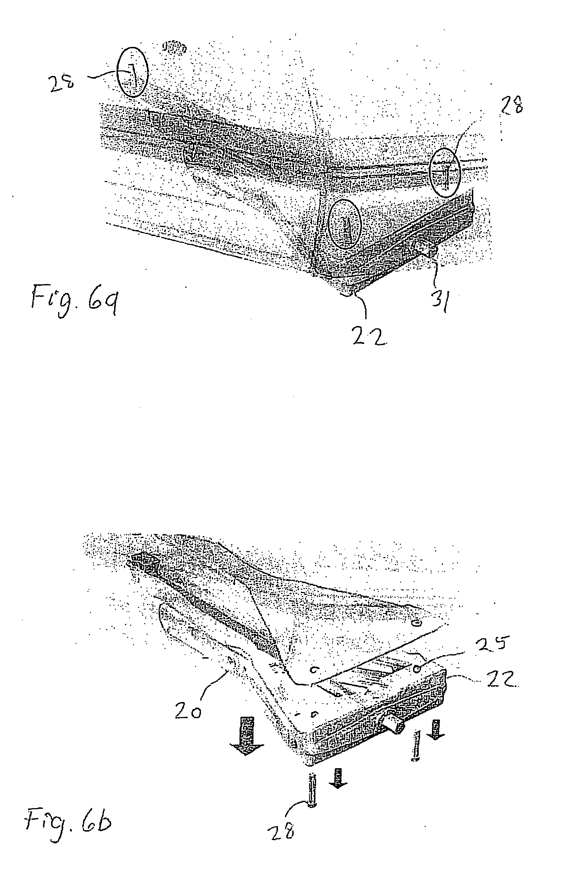

Fig. 6a shows the original screws 28 in the condition where the original manually operated steady is secured to a caravan bottom, where the caravan structure is only indicated by shaded areas. The number 31 denotes the original hexagon head of the steady. Fig. 6b shows dismounting the steady by removing the screws 28 in direction of the arrows, after which the steady is separated from the caravan.

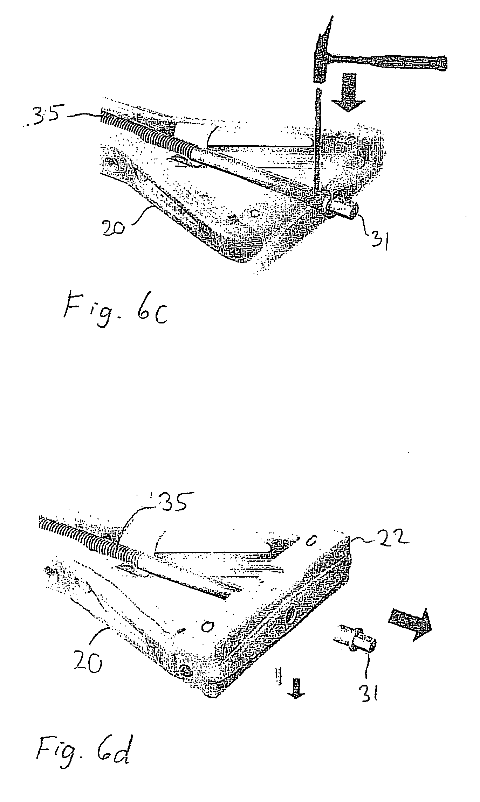

Fig. 6c shows how a pin securing the connection between original screw spindle 35 and hexagon head 31 can be removed by using a punch and a hammer. Fig. 6d shows separation of hexagon head 31 and head 35. After that, the original screw spindle 35 is removed from the unseen nut 23 by rotating the spindle 35.

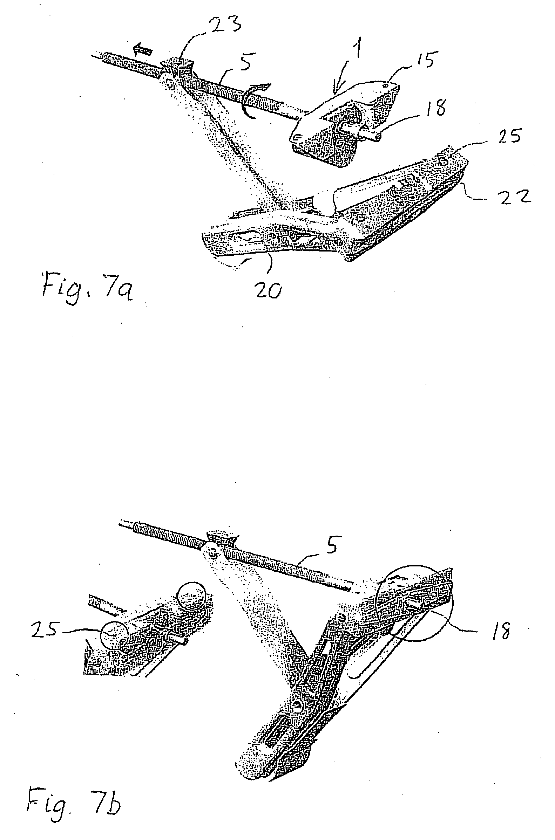

Mounting of the drive unit 1 then follows. As seen on Fig. 7a, the screw spindle 5 is mounted by rotating it into the threaded nut 23 of the steady. The holes 15 on the drive unit 1 and the holes 25 on the fixed part 22 of the steady, which are to be aligned in the following step, are shown here.

Fig. 7b shows the steady after mounting the bracket 7 of the drive unit into the fixed part 22 so that holes 15 and 25 are aligned. The second end 18 of the output shaft has been inserted into the existing aperture and projects from the external side of the fixed part 22.

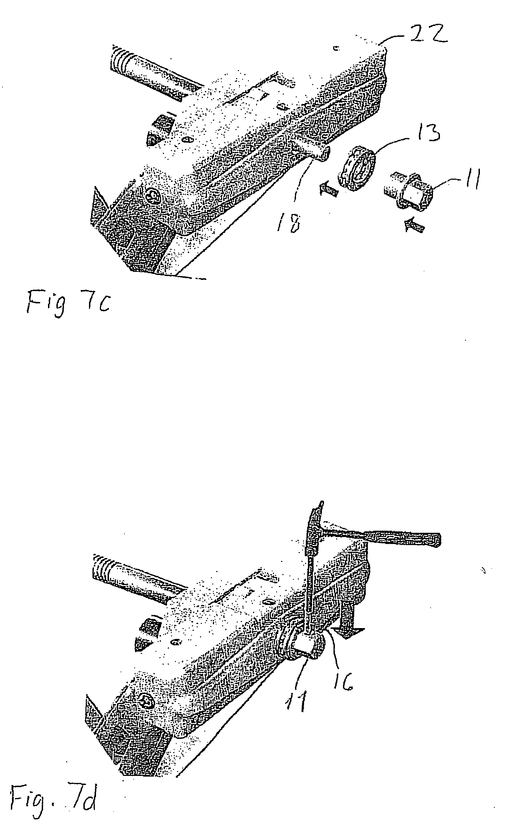

Fig. 7c shows mounting of the axial bearing 13 and the hexagon head 11 provided for the drive unit. Fig. 7d shows how the head 11 is secured on the second end 18 of the output shaft by forcing the pin 16 through aligned and predrilled holes (not shown) in parts 18 and 11, respectively.

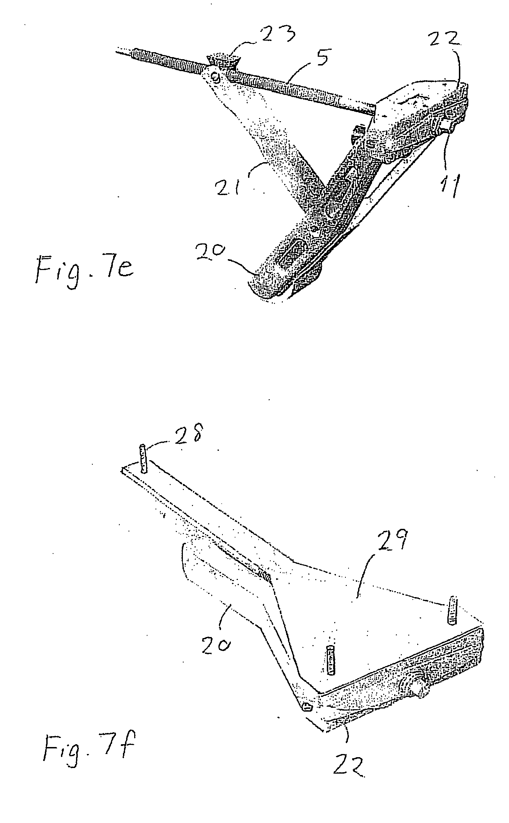

The steady provided with the retrofitted drive unit appears ready for use on Fig. 7e. The step of remounting the steady on the caravan, e.g. on the existing base plate 29, by the screws 28 through the holes 15, 25 provided in bracket 7 and fixed part 22, respectively, is shown on Fig. 7f.

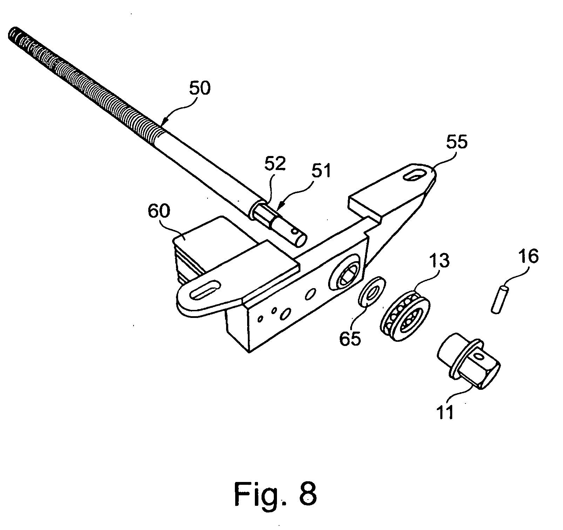

A second embodiment of the drive unit according to the invention is shown on Figs. 8-12.

The main parts of the second embodiment are a screw spindle 50 with extended shaft end 51, a bracket 55 designed as a casing for the gearbox and to which the electric motor 60 is attached, a washer 65, an axial bearing 13, a hexagon head 11 and a pin 16. The bracket is adapted to another type of manual steady having with a straight leg 70 and two lever arms 71 connecting the leg 70 with a fixed part 72 of the steady. In this case, no space is available under the spindle for the motor 60, and the motor 60 therefore has to be provided at one side.

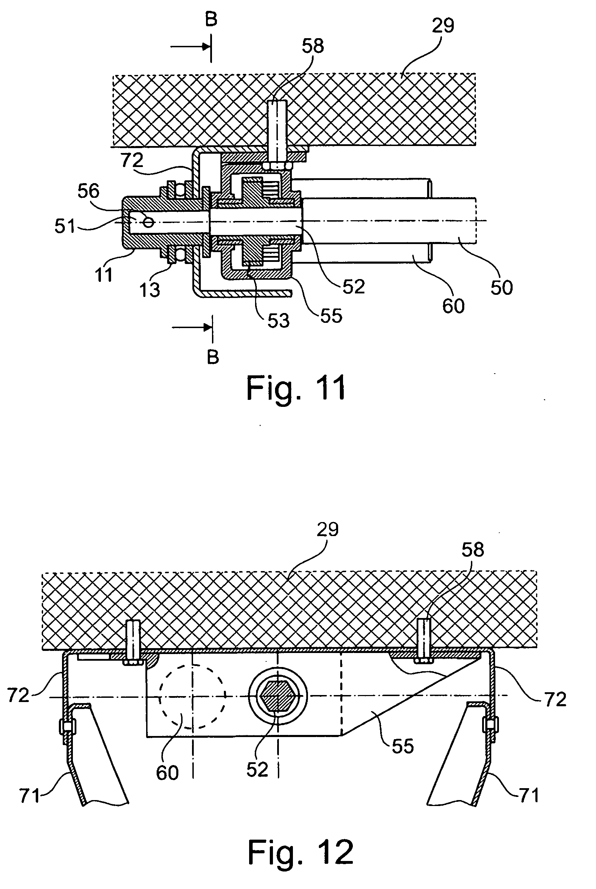

In the second embodiment, the shaft end 51 may be provided with a polygonal shape 52, here with a hexagonal cross-section, see Fig. 12, for transmitting the torque from an output gear wheel 53 in the gearbox. The shaft end 51 is so long that it protrudes out at the other side of the fixed part 72 of the steady and provides a means for mounting the axial bearing 13 and for securing by a hexagon head 11 by the pin 16. The elements 16, 13 and 11 may be identical to those provided for the first embodiment, and a hole 56 is similarly provided for the purpose in the shaft end 51.

The retrofitting of the second embodiment of the drive unit according to the invention is done by following the same steps as in the first embodiment, only substituting the shaft end 51 with the second output shaft in the first embodiment of the drive unit. Original screws 58 used for the steady are also used here for fitting the drive unit to the bottom 29 of the trailer vehicle in original mounting hole at the bottom.

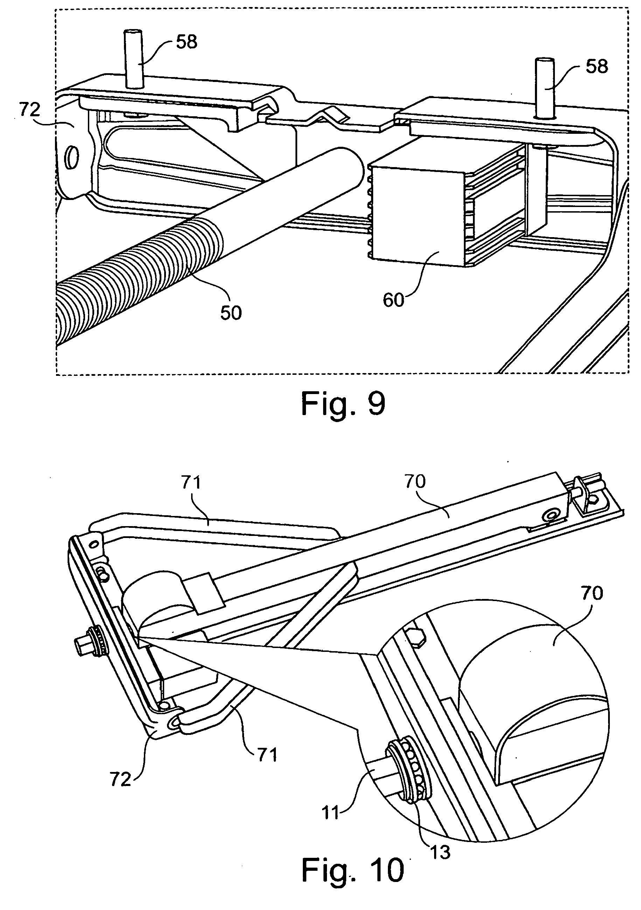

In the mounted condition shown on Figs. 9 and 10, it clearly appears that the motor 60 is placed beside the screw spindle 50, making it possible for the steady to be completely collapsed and without taking up space outside the structural parts of the steady. This is particularly the case when viewing the steady from above and comparing the original manually operated steady with the steady fitted with a drive unit according to the invention. The advantages provided by the first embodiment of the invention are also provided by the second embodiment.

A third embodiment of the drive unit according to the invention appears on Figs. 13 - 16. Similar to the embodiment shown on Figs. 2 - 4, the steady has a leg 20, a lever arm 21 and a fixed part 22 to which the drive unit 80 is fitted. The variant shown on Fig. 14 only differs in that a flat rail 86 is fitted on top of the steady for providing a guide for the nut with flat head 23 shown on Fig. 13. The rail 86 is an accessory for mounting on certain trailer bottoms where no proper contact faces exist for guiding the head 23.

In this third embodiment, the drive unit 80 incorporates a special control device 81 for providing overload protection to the electric and mechanical components of the steady. The control device 81 connects the proximate end 88 of the spindle 85 with the output shaft 87 of the gearbox 89, see Fig. 15. The drive unit 80 is here provided with the motor beside and not under the spindle in the mounted condition.

As seen on Fig. 16, the drive unit 80 can be supplied as a separate set for retrofitting on existing manual steadies. Wiring, power and control devices are not shown but well-known to the skilled in the art. Screw spindle 85, control device 81, gearbox 89 and motor 83 are mounted on a bracket 82 which may be inserted and secured in the fixed part 22 of an existing manual steady in the way described previously, using apertures or slots 84 in the bracket 82 for passage of mounting screws 28. A hexagon head 11, a bearing 13 and a pin 16 as described above are also part of this set for the mounting operation. The mounted drive unit 80 appears more clearly on Fig. 15. The third embodiment of the drive unit may of course also be configured so as to be fitted in the steady before delivery to the customer.

Other embodiments of the invention may be envisaged. For example, the gearbox and laterally disposed motor unit in the second embodiment may be a separate part which is attached to the bracket. Conversely, the gearbox/motor unit in the first embodiment may alternatively be integrated with the bracket 7 and the output shafts 17, 18 as well as the spindle 5. Also, the different configurations of motor, gearbox and control device may be combined in other ways than described within the scope of the claims.

## Claims

1. A drive unit (1) for an electrically operated steady extendable support leg for a trailer vehicle, e.g. a caravan, including an screw spindle (5) connected to a gearbox (3) at one side thereof, the gearbox being drivingly connected with an electric motor (8), **characterised in that** the gearbox and motor (8) are integrated with or attached to a bracket (7) which is adapted to fit under and into a fixed part of a manually operated steady extendable support leg (8), and that the electric motor (8) is disposed projecting to the same side of the bracket as the screw spindle (5) and beside the screw spindle.

2. A drive unit (1) according to claim 1, wherein the electric motor (8) is disposed under the screw spindle (5) in the mounted condition, and where a first end (17) of the output shaft pro-jects from the gearbox (3) at a first side thereof and a second end (18) of the output shaft projects from an opposite second side of the gearbox (3), where the first end (17) of the output shaft is connected with the screw spindle (5).

3. A drive unit (1) according to claim 1, wherein the electric motor (8) is disposed at one side of a vertical plane through the rotary axis of the screw spindle (5) in the mounted condition of the drive unit, and where a first end of the output shaft projects from the gearbox at a first side thereof and a second end of the output shaft projects from an opposite second side of the gearbox, where the first end of the output shaft is connected with the screw spindle (5).

4. A drive unit according to claim 2 or 3, wherein the gearbox and the motor (8) are at least partially enclosed by a common casing, the casing being attached to or integrated with the bracket (7).

5. A drive unit according to claim 1, wherein the bracket (7) is designed as a casing for the gearbox (3), where the electric motor (8) is attached to the casing at one side of a vertical plane through the rotary axis of the screw spindle (5) in the mounted condition.

6. A drive unit (1) according to claim 5, wherein an output gear wheel (53) of the gear box is adapted to receive one end of the screw spindle (50) in such a way that the screw spindle is drivingly connected to the output gear wheel.

7. A drive unit (1) according to any preceding claim, wherein the second end of the output shaft or the end of the screw spindle, respectively, is adapted to be secured to a key head (11) at the side of the fixed part of the stead facing away from the screw spindle.

8. A drive unit (1) according to any preceding claim, including an axial bearing for mounting between a key head on the second end of the output shaft or the end of the screw spindle, respectively, on the one hand and a fixed part of the steady on the other hand.

9. A method for retrofitting an electric drive unit according to claim 1 to a steady extendable support leg made for manual operation, where the steady is mounted at the downwards facing bottom (29) of a trailer vehicle, e.g. a caravan, the drive unit including a screw spindle (5) connected to a gearbox (3) at one side thereof, the gearbox being drivingly connected with an electric motor, (8) the gearbox and motor being integrated with or attached to a bracket (7) which is adapted to fit under and into a fixed part of the steady, and where the electric motor is disposed projecting to the same side of the bracket as the screw spindle and beside the screw spindle, including the following steps:
a) dismounting the manually operated steady from the bottom of the trailer vehicle;
b) removing a manually operated spindle (5) from the steady by separating a key head (11) attached to the second end of the spindle at a fixed part of the steady at one end of the spindle, drawing the second end of the manually operated spindle out of a hole in the fixed part, and unscrewing the manually operated spindle from a threaded nut receiving the spindle at the other end thereof;
c) mounting a free end of the screw spindle of the electric drive unit in the threaded nut of the steady by turning the screw spindle a number of revolutions;
d) letting an end of an output shaft from the gearbox or an end of the screw spindle through the hole in the fixed part of the steady such that the bracket is lodged under and in the fixed part of the steady;
e) remounting the steady with the electric drive unit on the bottom of the trailer vehicle.

10. A method according to claim 9, including the step of fitting and securing a key head (11) on the end of the output shaft or the shaft end of the screw spindle, respectively, between steps d) and e).

11. A method according to claim 10, wherein an axial bearing is mounted by putting the bearing (13) on the end of the output shaft or the end of the screw spindle, respectively, before fitting and securing the key head.

12. A method according to claim 9 or 10, wherein the fitting of the key head on the end of the output shaft or the end of the screw spindle, respectively, is performed by forc-ing a pin (16) through a pre-drilled hole in the key head (11) and further through a pre-drilled hole aligned therewith in the second end of the output shaft or the end of the screw spindle, respectively.

13. A method according to any of claims 9 - 12, wherein the remounting of the steady extendable support leg on the trailer in step e) is performed by using the already existing attachment points, e.g. screw holes, used for the original mounting of the steady before the retrofitting operation.

## Patentansprüche

1. Antriebseinheit (1) für eine elektrisch betriebene, ausdrehbare Abstellstütze für ein Anhängerfahrzeug, z. B. einen Wohnwagen, mit einer an einer Seite davon mit einem Getriebe (3) verbundenen Schraubenspindel (5), wobei das Getriebe mit einem elektrischen Motor (8) antriebsverbunden ist, **dadurch gekennzeichnet, dass** das Getriebe und der Motor (8) in einer Halterung (7) integriert oder an dieser befestigt sind, die angepasst ist, um unter und in einen fixierten Teil einer manuell betriebenen, ausdrehbaren Abstellstütze zu passen, und dass der elektrische Motor (8) so angebracht ist, dass er auf derselben Seite der Halterung wie die Schraubenspindel (5) und neben der Schraubenspindel herausragt.

2. Antriebseinheit (1) nach Anspruch 1, wobei der elektrische Motor (8) im montierten Zustand unter der Schraubenspindel (5) angebracht ist, und wobei ein erstes Ende (17) der Abtriebswelle aus dem Getriebe (3) an einer ersten Seite davon herausragt und ein zweites Ende (19) der Abtriebswelle aus einer gegenüberliegenden zweiten Seite des Getriebes (3) herausragt, wobei das erste Ende (17) der Abtriebswelle mit der Schraubenspindel (5) verbunden ist.

3. Antriebseinheit (1) nach Anspruch 1, wobei der elektrische Motor (8) an einer Seite einer vertikalen Ebene durch die Rotationsachse der Schraubenspindel (5) im montierten Zustand der Antriebseinheit angebracht ist, und wobei ein erstes Ende der Abtriebswelle aus dem Getriebe an einer ersten Seite davon herausragt und ein zweites Ende der Abtriebswelle aus einer gegenüberliegenden zweiten Seite des Getriebes herausragt, wobei das erste Ende der Abtriebswelle mit der Schraubenspindel (5) verbunden ist.

4. Antriebseinheit nach Anspruch 2 oder 3, wobei das Getriebe und der Motor (8) wenigstens teilweise in einem gemeinsamen Gehäuse untergebracht sind, wobei das Gehäuse an der Halterung (7) befestigt oder darin integriert ist.

5. Antriebseinheit nach Anspruch 1, wobei die Halterung (7) als Gehäuse für das Getriebe (3) konstruiert ist, wobei der elektrische Motor (8) im montierten Zustand an einer Seite einer vertikalen Ebene durch die Rotationsachse der Schraubenspindel (5) an dem Gehäuse befestigt ist.

6. Antriebseinheit (1) nach Anspruch 5, wobei ein Abtriebszahnrad (53) des Getriebes angepasst ist, um ein Ende der Schraubenspindel (50) so aufzunehmen, dass die Schraubenspindel mit dem Abtriebszahnrad antriebsverbunden ist.

7. Antriebseinheit (1) nach einem der vorhergehenden Ansprüche, wobei das zweite Ende der Abtriebswelle oder das Ende der Schraubenspindel angepasst ist, um an einem Schlüsselkopf (11) an der von der Schraubenspindel abgewandten Seite des fixierten Teils der Stütze gesichert zu werden.

8. Antriebseinheit (1) nach einem der vorhergehenden Ansprüche, umfassend einem axialen Lager für eine Montage zwischen einem Schlüsselkopf auf dem zweiten Ende der Abtriebswelle oder dem Ende der Schraubenspindel einerseits und einem fixierten Teil der Stütze andererseits.

9. Verfahren zum Umrüsten einer elektrischen Antriebseinheit nach Anspruch 1 zu einer zur manuellen Bedienung hergestellten, ausdrehbaren Abstellstütze, wobei die Stütze an dem nach unten gewandten Boden (29) eines Anhängerfahrzeugs, z. B. eines Wohnwagens, montiert ist, die Antriebseinheit eine an einer Seite davon mit einem Getriebe (3) verbundene Schraubenspindel (5) beinhaltet, das Getriebe mit einem elektrischen Motor (8) antriebsverbunden ist, das Getriebe und der Motor in eine Halterung (7) integriert oder an dieser befestigt sind, die angepasst ist, um unter und in einen fixierten Teil der Stütze zu passen, und wobei der elektrische Motor so angebracht ist, dass er auf derselben Seite der Halterung wie die Schraubenspindel und neben der Schraubenspindel hervorragt, umfassend der folgenden Schritte:
a) Abmontieren der manuell betriebenen Stütze von dem Boden des Anhängerfahrzeugs;
b) Entfernen einer manuell betriebenen Spindel (5) von der Stütze, indem ein an dem zweiten Ende der Spindel an einem fixierten Teil der Stütze an einem Ende der Spindel befestigter Schlüsselkopf (11) abgetrennt wird, das zweite Ende der manuell betriebenen Spindel durch ein Loch in dem fixierten Teil herausgezogen wird und die manuell betriebene Spindel aus einer Gewindenut, die die Spindel am anderen Ende davon aufnimmt, herausgeschraubt wird;
c) Montieren eines freien Endes der Schraubenspindel der elektrischen Antriebseinheit in die Gewindenut der Stütze, indem die Schraubenspindel um eine Anzahl an Umdrehungen gedreht wird;
d) Hindurchlassen eines Endes einer Abtriebswelle von dem Getriebe oder eines Endes der Schraubenspindel durch das Loch in dem fixierten Teil der Stütze, so dass die Halterung unter und in dem festen Teil der Stütze eingebettet ist;
e) Wiedermontieren der Stütze mit der elektrischen Antriebsvorrichtung an den Boden des Anhängerfahrzeugs.

10. Verfahren nach Anspruch 9, umfassend dem Schritt des Einpassens und Sicherns eines Schlüsselkopfes (11) auf dem Ende der Abtriebswelle oder dem Wellenende der Schraubenspindel, zwischen den Schritten d) und e).

11. Verfahren nach Anspruch 10, wobei ein axiales Lager montiert wird, indem das Lager (13) auf das Ende der Abtriebswelle oder das Ende der Schraubenspindel gelegt wird, bevor der Schlüsselkopf montiert und gesichert wird.

12. Verfahren nach Anspruch 9 oder 10, wobei das Einpassen des Schlüsselkopfes an dem Ende der Abtriebswelle oder dem Ende der Schraubenspindel ausgeführt wird, indem ein Bolzen (16) durch ein vorgebohrtes Loch in dem Schlüsselkopf (11) und weiter durch ein daran ausgerichtetes vorgebohrtes Loch an dem zweiten Ende der Abtriebswelle oder dem Ende der Schraubenspindel getrieben wird.

13. Verfahren nach einem der Ansprüche 9 - 12, wobei wiedermontieren der ausdrehbaren Abstellstütze an den Anhänger in Schritt e) unter Verwendung der bereits vorhandenen Befestigungspunkte, z. B. Schraubenlöcher, durchgeführt wird, die für die ursprüngliche Montage der Stütze vor dem Umrüstvorgang verwendet wurden.

## Revendications

1. Unité d'entraînement (1) pour un pied de support extensible de soutien actionné électriquement pour un véhicule à remorque, par exemple une caravane, comprenant une tige filetée (5) raccordée à une boîte à engrenage (3) sur un côté de celle-ci, la boîte à engrenage étant raccordée en entraînement à un moteur électrique (8), **caractérisée en ce que** la boîte à engrenage et le moteur (8) sont intégrés avec ou fixés à un appui (7) qui est adapté pour s'ajuster sous et dans une partie fixe d'un pied de support extensible de soutien actionné manuellement, et que le moteur électrique (8) est disposé en saillie vers le même côté de l'appui que la tige filetée (5) et à côté de la tige filetée.

2. Unité d'entraînement (1) selon la revendication 1, dans laquelle le moteur électrique (8) est disposé sous la tige filetée (5) dans la condition montée, et où une première extrémité (17) de l'arbre de sortie fait saillie à partir de la boîte à engrenage (3) sur un premier côté de celle-ci et une seconde extrémité (18) de l'arbre de sortie fait saillie à partir d'un second côté opposé de la boîte à engrenage (3), où la première extrémité (17) de l'arbre de sortie est raccordée à la tige filetée (5).

3. Unité d'entraînement (1) selon la revendication 1, dans laquelle le moteur électrique (8) est disposé sur un côté d'un plan vertical à travers l'axe rotatif de la tige filetée (5) dans la condition montée de l'unité d'entraînement, et où une première extrémité de l'arbre de sortie fait saillie à partir de la boîte à engrenage sur un premier côté de celle-ci et une seconde extrémité de l'arbre de sortie fait saillie à partir d'un second côté opposé de la boîte à engrenage, où la première extrémité de l'arbre de sortie est raccordée à la tige filetée (5).

4. Unité d'entraînement selon la revendication 2 ou 3, dans laquelle la boîte à engrenage et le moteur (8) sont au moins partiellement enfermés par un boîtier commun, le boîtier étant fixé à ou intégré avec l'appui (7).

5. Unité d'entraînement selon la revendication 1, dans laquelle l'appui (7) est conçu sous forme de boîtier pour la boîte à engrenage (3), où le moteur électrique (8) est fixé au boîtier sur un côté d'un plan vertical à travers l'axe rotatif de la tige filetée (5) dans la condition montée.

6. Unité d'entraînement (1) selon la revendication 5, dans laquelle une roue d'engrenage de sortie (53) de la boîte d'engrenage est adaptée pour recevoir une extrémité de la tige filetée (50) de manière telle que la tige filetée soit raccordée en entraînement à la roue d'engrenage de sortie.

7. Unité d'entraînement (1) selon une quelconque revendication précédente, dans laquelle la seconde extrémité de l'arbre de sortie ou l'extrémité de la tige filetée, respectivement, est adaptée pour être fixée à une tête de clavette (11) sur le côté de la partie fixe du soutien orienté à l'opposée de la tige filetée.

8. Unité d'entraînement (1) selon une quelconque revendication précédente, comprenant un palier axial pour le montage entre une tête de clavette sur la seconde extrémité de l'arbre de sortie ou l'extrémité de la tige filetée, respectivement, d'une part, et une partie fixe du soutien, d'autre part.

9. Procédé pour installer en rattrapage une unité d'entraînement électrique selon la revendication 1 sur un pied de support extensible de soutien fait pour l'actionnement manuel, où le soutien est monté sur le fond tourné vers le bas (29) d'un véhicule à remorque, par exemple une caravane, l'unité d'entraînement comprenant une tige filetée (5) raccordée à une boîte à engrenage (3) sur un côté de celle-ci, la boîte à engrenage étant raccordée en entraînement avec un moteur électrique (8), la boîte à engrenage et le moteur étant intégrés avec ou fixés à un appui (7) qui est adapté pour aller sous et dans une partie fixe du soutien, et où le moteur électrique est disposé en saillie vers le même côté de l'appui que la tige filetée et à côté de la tige filetée, comprenant les étapes suivantes :
a) le démontage du soutien actionné manuellement à partir du fond du véhicule à remorque ;
b) l'enlèvement d'une tige actionnée manuellement (5) à partir du soutien en séparant une tête de clavette (11) fixée à la seconde extrémité de la tige sur une partie fixe du soutien à une extrémité de la tige, le tirage de la seconde extrémité de la tige actionnée manuellement hors d'un trou dans la partie fixe, et le dévissage de la tige actionnée manuellement à partir d'un écrou fileté recevant la tige à l'autre extrémité de celle-ci ;
c) le montage d'une extrémité libre de la tige filetée de l'unité d'entraînement électrique dans l'écrou fileté du soutien en faisant tourner la tige filetée selon un nombre de révolutions ;
d) le passage libre d'une extrémité d'un arbre de sortie à partir de la boîte à engrenage ou d'une extrémité de la tige filetée à travers le trou dans la partie fixe du soutien de telle sorte que l'appui soit logé sous et dans la partie fixe du soutien ;
e) le remontage du soutien avec l'unité d'entraînement électrique sur le fond du véhicule à remorque.

10. Procédé selon la revendication 9, comprenant l'étape de l'installation et de la fixation d'une tête de clavette (11) sur l'extrémité de l'arbre de sortie ou sur l'extrémité arbre de la tige filetée, respectivement, entre les étapes d) et e).

11. Procédé selon la revendication 10, dans lequel un palier axial est monté en plaçant le palier (13) sur l'extrémité de l'arbre de sortie ou sur l'extrémité de la tige filetée, respectivement, avant l'installation et la fixation de la tête de clavette.

12. Procédé selon la revendication 9 ou 10, dans lequel l'installation de la tête de clavette sur l'extrémité de l'arbre de sortie ou sur l'extrémité de la tige filetée, respectivement, est réalisée en forçant une goupille (16) à travers un trou pré-percé dans la tête de clavette (11) et en outre à travers un trou pré-percé aligné avec celui-ci dans la seconde extrémité de l'arbre de sortie ou de l'extrémité de la tige filetée, respectivement.

13. Procédé selon l'une quelconque des revendications 9 à 12, dans lequel le remontage du pied de support extensible de soutien sur la remorque dans l'étape e) est réalisé en utilisant les points de fixation existant déjà, par exemple des trous de vis, utilisés pour le montage d'origine du soutien avant l'opération de rattrapage.
